# EUROPEAN PATENT APPLICATION

(11) **EP 1 764 957 A1**
(43) Date of publication of application: **21.03.2007**
(21) Application number: 05255723.8
(22) Date of filing: 15.09.2005
(51) Int. Cl.: H04L 12/56, H04L 12/26

(54) **System and method for evaluating lower layer reliability using upper layer protocol funcionality in a communications network**

(71) Applicant: Research In Motion Limited, Waterloo, Ontario N2L 3W8 (CA)
(72) Inventor: Cormier, Jean-Philippe, Ottawa, Ontario K2P0M5 (CA)
(74) Representative: Roberts, Gwilym Vaughan

(57) **Abstract**

In one embodiment, a method is provided for evaluating reliability of a communications link between a sender and a receiver in a wireless packet data network (112). The method comprises detecting (504) that a datagram (602) or a fragment thereof received (500) at a receiver is a retransmitted datagram or datagram fragment; and responsive to the detecting (504), the receiver initiating measures (512) to correct a defect in the communications link.

## Description

### FIELD OF THE APPLICATION

The present patent application generally relates to wireless packet data service networks. More particularly, and not by way of any limitation, the present patent application is directed to a system and method for evaluating lower layer reliability using upper layer protocol functionality in a wireless packet data service network.

### BACKGROUND

It is becoming commonplace to use wireless packet data service networks for effectuating data sessions with mobile communications devices (MCDs). Generally, applications executing on an MCD do not have any knowledge of the current state of the data connection, as the diagnostic application programming interfaces (APIs) that would help the application make an intelligent assessment of the current state of the data connection are typically not exposed to the application.

This limitation transforms all such applications into dumb datagram fragment reassemblers, in that they are only capable of assembling datagrams from incoming data packets. On the other hand, the robustness built into a Layer-2 protocol operable with the MCD hides all network-related problems from the receiver application.

Because there is currently no way for an application to determine that there is a link layer problem, the MCD cannot apply any known corrective measure to the underlying radio link layer. One potential link layer problem is clumping, which can adversely affect the network infrastructure and cause unnecessary load therein.

### SUMMARY

One embodiment is a method for evaluating reliability of a communications link between a sender and a receiver in a wireless packet data network, wherein the method comprises one or more of the following: transmitting a datagram or at least a fragment thereof to the receiver; responsive to a failure to receive acknowledgment of receipt of the datagram or its fragment, setting a retransmit flag of the datagram fragment and retransmitting the datagram fragment; and responsive to receipt by the receiver of the retransmitted datagram fragment, detecting that the retransmit flag thereof is set, whereby a determination may be made, responsive to the detecting, that a defect exists in the communications link.

Another embodiment is a method for evaluating reliability of a communications link in a wireless packet data network, wherein the method comprises one or more of the following: detecting that a datagram or fragment thereof received at a receiver is a retransmitted datagram fragment; and, responsive to the detecting, the receiver initiating measures to correct a defect in the communications link.

Another embodiment is a mobile communications device comprising one or more of the following: means for communicating with a wireless packet data network over a communications link; a logic block adapted to detect if a retransmit flag of a datagram or its fragment transmitted over the communication link is set, whereby a determination may be made, responsive to the detecting, that a defect exists in the communications link; and a module for initiating a corrective action.

Another embodiment is a system for evaluating reliability of a communications link between a sender and a receiver in a wireless packet data network, wherein the system comprises one or more of the following: means for transmitting a datagram or its fragment to the receiver; means responsive to a failure to receive acknowledgment of receipt of the datagram or its fragment for setting a retransmit flag of the datagram fragment and retransmitting the datagram fragment; means responsive to receipt by the receiver of the retransmitted datagram fragment for detecting that the retransmit flag thereof is set, whereby a determination may be made, responsive to the detecting, that a defect exists in the communications link.

Another embodiment is a system for evaluating reliability of a communications link in a wireless packet data network, wherein the system comprises one or more of the following: means for detecting that a datagram or its fragment received at a receiver is a retransmitted datagram or fragment; and means responsive to the detecting for initiating measures to correct a defect in the communications link.

### BRIEF DESCRIPTION OF THE DRAWINGS

A more complete understanding of the embodiments of the present patent application may be had by reference to the following Detailed Description when taken in conjunction with the accompanying drawings wherein:

FIG. 1 depicts an exemplary network environment including a wireless packet data service network wherein an embodiment of the present patent application may be practiced;

FIG. 2 depicts a software architectural view of a mobile communications device according to one embodiment;

FIG. 3 depicts a flowchart of operation of a sender in a wireless packet data service network according to one embodiment;

FIG. 4 depicts a flowchart of operation of a receiver in a wireless packet data service network according to one embodiment;

FIG. 5 depicts a message flow diagram with respect to an exemplary mechanism for effectuating evaluation of the reliability of a link layer and initiating corrective measures according to an embodiment; and

FIG. 6 depicts a block diagram of a mobile communications device according to one embodiment.

### DETAILED DESCRIPTION OF THE DRAWINGS

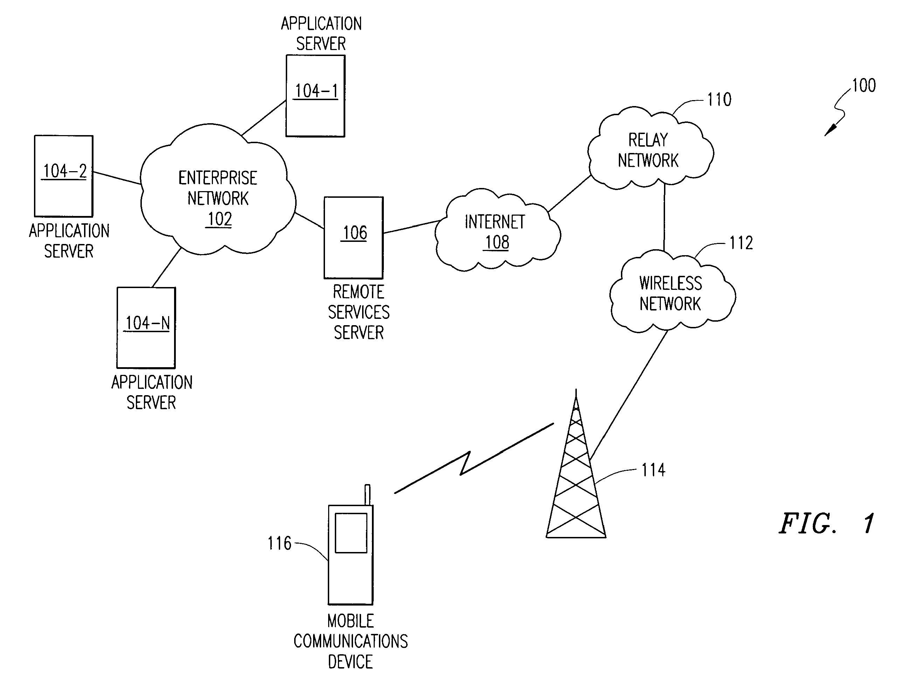

A system and method of the present patent application will now be described with reference to various examples of how the embodiments can best be made and used. Like reference numerals are used throughout the description and several views of the drawings to indicate like or corresponding parts, wherein the various elements are not necessarily drawn to scale. Referring now to the drawings, and more particularly to FIG. 1, depicted therein is an exemplary network environment 100 including a wireless packet data service network 112 wherein an embodiment of the present patent application may be practiced. An enterprise network 102, which may be a packet-switched network, can include one or more geographic sites and be organized as a local area network (LAN), wide area network (WAN) or metropolitan area network (MAN), et cetera, for serving a plurality of corporate users. A number of application servers 104-1 through 104-N disposed as part of the enterprise network 102 are operable to provide or effectuate a host of internal and external services such as email, video mail, Internet access, corporate data access, messaging, calendaring and scheduling, information management, and the like. Accordingly, a diverse array of personal information appliances such as desktop computers, laptop computers, palmtop computers, et cetera, although not specifically shown in FIG. 1, may be operably networked to one or more of the application servers 104-i, i = 1, 2,...,N, with respect to the services supported in the enterprise network 102.

Additionally, a remote services server 106 may be interfaced with the enterprise network 102 for enabling a corporate user to access or effectuate any of the services from a remote location using a suitable mobile communications device (MCD) 116. A secure communication link with end-to-end encryption may be established that is mediated through an external IP network, i.e., a public packet-switched network such as the Internet 108, as well as the wireless packet data service network 112 operable with MCD 116 via suitable wireless network infrastructure that includes a base station (BS) 114. In one embodiment, a trusted relay network 110 may be disposed between the Internet 108 and the infrastructure of wireless packet data service network 112. In another embodiment, the infrastructure of the trusted relay network 110 may be integrated with the wireless packet data service network 112, whereby the functionality of the relay infrastructure, may be consolidated as a separate layer within a "one-network" environment. Additionally, by way of example, MCD 116 may be a data-enabled mobile handheld device capable of receiving and sending messages, web browsing, interfacing with corporate application servers, et cetera, regardless of the relationship between the networks 110 and 112. Accordingly, a "network node" may include both relay functionality and wireless network infrastructure functionality in some exemplary implementations.

For purposes of the present patent application, the wireless packet data service network 112 may be implemented in any known or heretofore unknown mobile communications technologies and network protocols, as long as a packet-switched data service is available therein for transmitting packetized information. For instance, the wireless packet data service network 112 may be comprised of a General Packet Radio Service (GPRS) network that provides a packet radio access for mobile devices using the cellular infrastructure of a Global System for Mobile Communications (GSM)-based carrier network. In other implementations, the wireless packet data service network 112 may comprise an Enhanced Data Rates for GSM Evolution (EDGE) network, an Integrated Digital Enhanced Network (IDEN), a Code Division Multiple Access (CDMA) network, a Universal Mobile Telecommunications System (UMTS) network, or any 3^{rd} Generation (3G) network. As will be seen hereinbelow, the embodiments of the present patent application will be described regardless of any particular wireless network implementation.

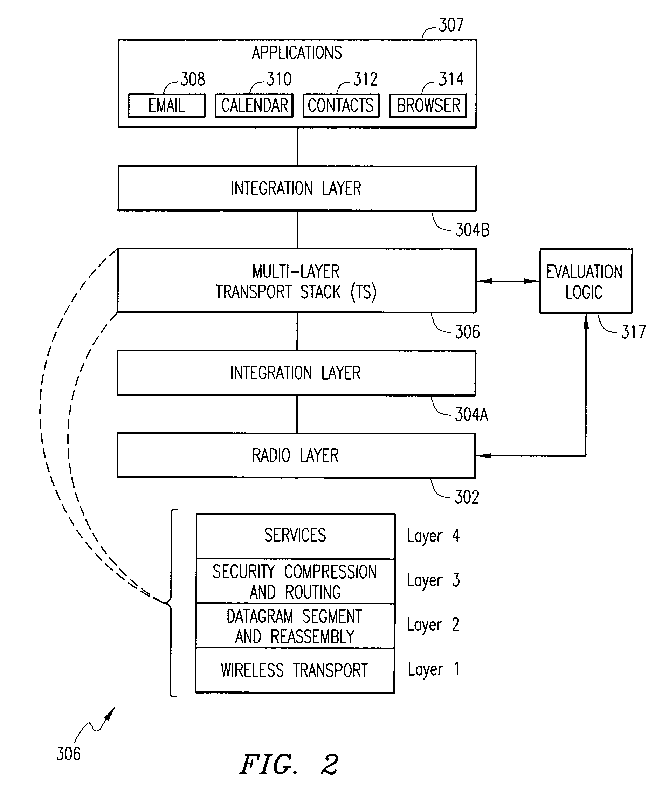

FIG. 2 depicts a software architectural view of a mobile communications device operable according to one embodiment. A multi-layer transport stack (TS) 306 is operable to provide a generic data transport protocol for any type of corporate data, including email, via a reliable, secure and seamless continuous connection to a wireless packet data service network. As illustrated in the embodiment of FIG. 2, an integration layer 304A is operable as an interface between the MCD's radio layer 302 and the transport stack 306. Likewise, another integration layer 304B is provided for interfacing between the transport stack 306 and the user applications 307 supported on the MCD, e.g., email 308, calendar/scheduler 310, contact management 312 and browser 314. Although not specifically shown, the transport stack 306 may also be interfaced with the MCD's operating system. In another implementation, the transport stack 306 may be provided as part of a data communications client module operable as a host-independent virtual machine on a mobile device.

The bottom layer (Layer 1) of the transport stack 306 is operable as an interface to the wireless network's packet layer. Layer 1 handles basic service coordination within the exemplary network environment 100 shown in FIG. 1. For example, when an MCD roams from one carrier network to another, Layer 1 verifies that the packets are relayed to the appropriate wireless network and that any packets that are pending from the previous network are rerouted to the current network. The top layer (Layer 4) exposes various application interfaces to the services supported on the MCD. The remaining two layers, Layer 2 and Layer 3, are responsible for datagram segmentation/reassembly and security, compression and routing, respectively.

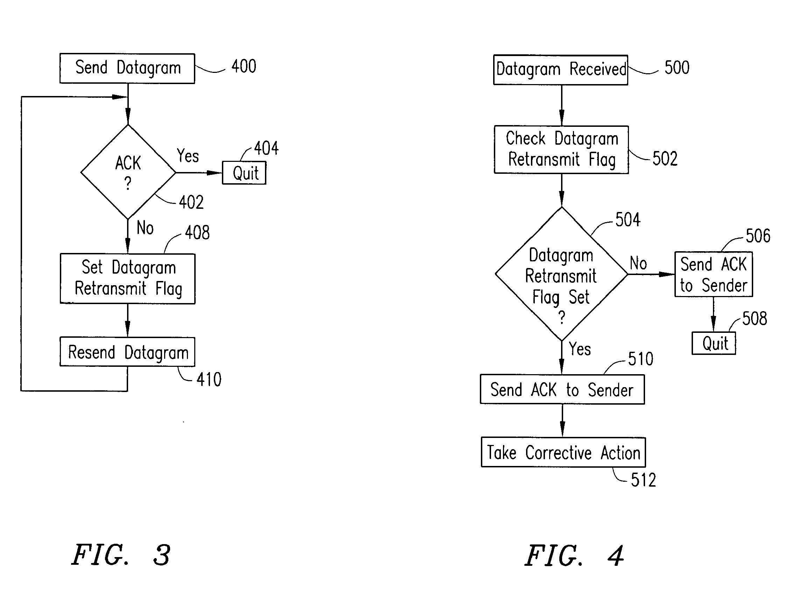

Continuing to refer to FIG. 2, an evaluation logic module 317 provided as part of the MCD's software environment is disposed in operable communication with the transport stack 306 as well as the OS environment for effectuating evaluation of the reliability of the link layer and initiating corrective measures as and when needed. In one implementation, as described in detail below with reference to FIG. 4, the evaluation logic module 317 includes logic means operable to determine whether one or more received datagrams have been retransmitted, indicating the receiving device is in a clumping state, and initiate one or more corrective measures based on that determination.

FIG. 3 is a flowchart illustrating operation of a sending device in connection with a mechanism for evaluating the reliability of the link layer in a communications network using upper layer protocol functionality in accordance with one embodiment. First, the sender (which could be a network node) sends a datagram (block 400). It will be assumed for the sake of example that the datagram comprises only a single data packet, although in reality, the datagram will likely comprise multiple data packets. Once the datagram (or all of the data packets comprising the datagram) is received, the receiver (which could be a handheld device) will acknowledge receipt with an acknowledge message (ACK) to the sender. After sending the datagram, the sender determines whether an ACK has been received (block 402), within a predetermined time period in one implementation. If an ACK is received, a wait state is entered (block 404) until a next datagram is ready for transmission. If an ACK is not received, presumably within a certain period of time, a Retransmit Flag in a header of the datagram (or in all of the data packets comprising the datagram) is set to indicate to the receiving device that the datagram is being retransmitted (block 408) and that there may be a problem with the link layer. The datagram is then resent (block 410).

FIG. 4 is a flowchart illustrating operation of a receiving device in connection with a mechanism for evaluating the reliability of the link layer in a communications network using upper layer protocol functionality in accordance with one embodiment. When a datagram or at least a fragment thereof sent from the sender (FIG. 3) is received at the receiver (block 500), the Retransmit Flag thereof (or of at least a portion of the data packets/fragments comprising the datagram) is checked (block 502) and a determination is made whether the Retransmit Flag is set (block 504). If not, an ACK is sent to the sender (block 506) and a wait state is entered (block 508) until a next datagram is received.

If it is determined that the Retransmit Flag is set, an ACK is sent to the sender (block 510) and corrective action is taken (block 512) with respect to the link layer. It will be recognized that the type and degree of corrective action taken will depend on the circumstances at hand. For example, in cases where the receiver is an MCD or other communications device, the corrective action might be to initiate a GPRS Detach/Reattach procedure. If the first corrective action does not solve the problem, it may be necessary to escalate corrective action, for example, by forcing a reset of the device.

In the opposite direction, if the sender is the MCD and the receiver is the network, corrective action may comprise notifying the link carrier that the link is somehow defective. Such corrective action in this direction would help prevent devices from continually retransmitting datagrams, saving carriers' bandwidth and conserving the battery life of the MCD.

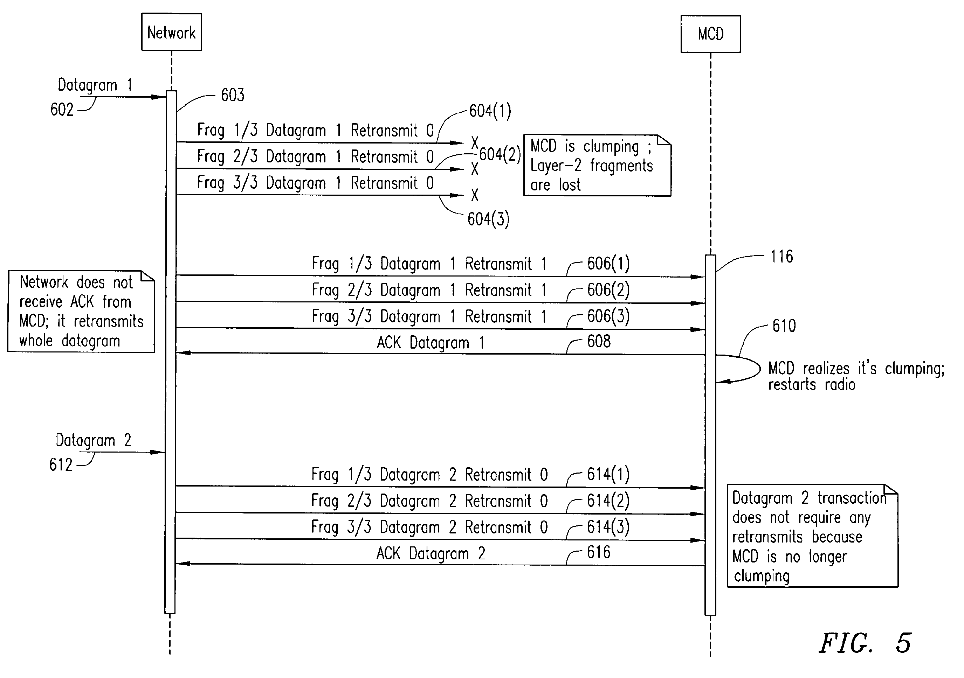

FIG. 5 depicts a message flow diagram with respect to an exemplary mechanism for evaluating the reliability of the link layer in a communications network, such as the network 100, in accordance with one embodiment. A datagram (Datagram 1) 602 from the enterprise network 102 is transmitted to a network node 603, e.g., a wireless network node that may include a relay network functionality in one embodiment, where it is fragmented or packetized into a plurality of fragments, e.g., data packets 604(1), 604(2), 604(3), and transmitted to the MCD 116. As illustrated in FIG. 5, as this is the first time the datagram 602 is transmitted to the MCD 116, a Retransmit Flag in a header of each of the data packets 604(1)-604(3) is not set.

As further illustrated in FIG. 5, none of the data packets 604(1)-604(3) is received by the MCD 116, which is in a clumping state. As a result, the MCD 116 does not send an acknowledge message (ACK) to the network 603 with respect to the datagram 602. Responsive to failure of the network node 603 to receive an ACK from the MCD 116, the network node retransmits the datagram 602 as data packets 606(1), 606(2), 606(3). Because this is a retransmission of the datagram 602, the Retransmit Flag in the header of each of the data packets 606(1)-606(3) is set. The retransmitted data packets 606(1)-606(3) are received by the MCD 116, which sends an ACK 608 to the network node 603. Additionally, the MCD 116, which is alerted to the fact that it is clumping by the fact that the Retransmit Flag for each of the data packets 606(1)-606(3) is set, takes corrective action 610, such as those described above.

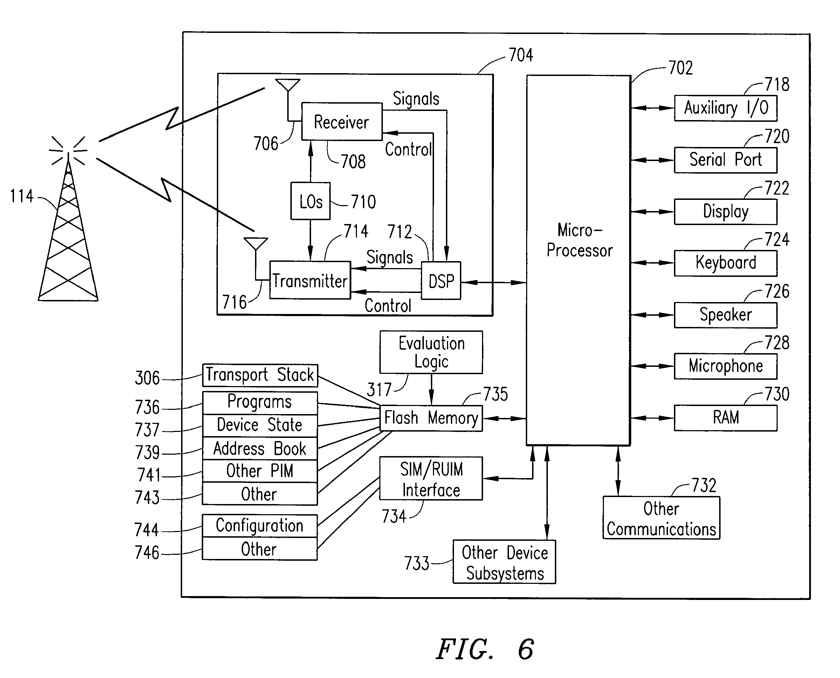

Subsequently, another datagram (Datagram 2) 612 from the enterprise network 102 is transmitted to the network node 603, where it is broken up into three data packets 614(1), 614(2), 614(3), and transmitted to the MCD 116. As illustrated in FIG. 6, as this is the first time the datagram 612 is transmitted to the MCD 116, the Retransmit Flag in the header of each of the data packets 614(1)-614(3) is not set.

As further illustrated in FIG. 5, all of the data packets 614(1)-614(3) are received by the MCD 116, which sends an ACK 616 to the network node 603. It will be recognized that receipt by the MCD 116 of the datagram 612 is due to the corrective action 610 taken by the MCD 116 responsive to notification thereof of retransmission of the datagram 602 as described hereinabove.

FIG. 6 depicts a block diagram of a mobile communications device operable according to one embodiment. It will be recognized by those skilled in the art upon reference hereto that although an embodiment of MCD 116 may comprise an arrangement similar to one shown in FIG. 6, there can be a number of variations and modifications, in hardware, software or firmware, with respect to the various modules depicted. Accordingly, the arrangement of FIG. 6 should be taken as illustrative rather than limiting with respect to the embodiments of the present patent application. A microprocessor 702 providing for the overall control of an embodiment of MCD 116 is operably coupled to a communication subsystem 704 which includes a receiver 708 and transmitter 714 as well as associated components such as one or more local oscillator (LO) modules 710 and a processing module such as a digital signal processor (DSP) 712. As will be apparent to those skilled in the field of communications, the particular design of the communication module 704 may be dependent upon the communications network with which the mobile device is intended to operate. In one embodiment, the communication module 704 is operable with both voice and data communications. Regardless of the particular design, however, signals received by antenna 706 through BS 114 are provided to receiver 708, which may perform such common receiver functions as signal amplification, frequency down conversion, filtering, channel selection, analog-to-digital (A/D) conversion, and the like. Similarly, signals to be transmitted are processed, including modulation and encoding, for example, by DSP 712, and provided to transmitter 714 for digital-to-analog (D/A) conversion, frequency up conversion, filtering, amplification and transmission over the air-radio interface via antenna 716.

Microprocessor 702 also interfaces with further device subsystems such as auxiliary input/output (I/O) 718, serial port 720, display 722, keyboard 724, speaker 726, microphone 728, random access memory (RAM) 730, a short-range communications subsystem 732, and any other device subsystems generally labeled as reference numeral 733. To control access, a Subscriber Identity Module (SIM) or Removable user Identity Module (RUIM) interface 734 is also provided in communication with the microprocessor 702. In one implementation, SIM/RUIM interface 734 is operable with a SIM/RUIM card having a number of key configurations 744 and other information 746 such as identification and subscriber-related data.

Operating system software and transport stack software may be embodied in a persistent storage module (i.e., non-volatile storage) such as Flash memory 735. In one implementation, Flash memory 735 may be segregated into different areas, e.g., storage area for computer programs 736 as well as data storage regions such as device state 737, address book 739, other personal information manager (PIM) data 741, and other data storage areas generally labeled as reference numeral 743. Additionally, an evaluation logic module 317 is provided for effectuating evaluation of the reliability of the link layer and initiating corrective measures as and when needed according to the teachings set forth hereinabove.

It is believed that the operation and construction of the embodiments of the present patent application will be apparent from the Detailed Description set forth above. While the exemplary embodiments shown and described may have been characterized as being preferred, it should be readily understood that various changes and modifications could be made therein without departing from the scope of the present invention as set forth in the following claims.

## Claims

1. A method for evaluating reliability of a communications link in a wireless packet data network (112), the method comprising:
detecting (504) that at least a fragment of a datagram (602) received (500) at a receiver is a retransmitted datagram fragment; and
responsive to the detecting (504), the receiver initiating measures (512) to correct a defect in the communications link.

2. The method of claim 1 wherein the detecting (504) comprises detecting that a retransmit flag of at least a fragment of the datagram (602) is set.

3. The method of claim 1 wherein the datagram (602) comprises a plurality of datagram fragments (606(1)-(606(3)).

4. The method of claim 3 wherein the detecting (504) comprises detecting that a retransmit flag of at least one of the plurality of datagram fragments (606(1)-(606(3)) is set.

5. The method of claim 1, claim 2, claim 3 or claim 4 wherein the corrective measure comprises executing a detach/reattach procedure.

6. The method of claim 1, claim 2, claim 3 or claim 4 wherein the corrective measure comprises resetting the receiver.

7. The method of claim 1, claim 2, claim 3 or claim 4 wherein the corrective measure comprises notifying at least one of a carrier or a transmitter associated with the communications link of the defect.

8. A mobile communications device (116), comprising:
means (704) for communicating with a wireless packet data network (112) over a communications link;
a logic module (317) adapted to detect if a retransmit flag of at least a fragment of a datagram transmitted over the communication link is set, whereby a determination may be made that a defect exists in the communication link; and
a logic module (317) for initiating a corrective action responsive to the determination.

9. A system for evaluating reliability of a communications link in a wireless packet data network (112), the system comprising:
means for detecting (504) that at least a fragment of a datagram (602) received (500) at the receiver is a retransmitted datagram fragment; and
means responsive to the detecting (504) for initiating measures (512) to correct a defect in the communications link.

10. The system of claim 9 wherein the means for detecting (504) comprises means for detecting that a retransmit flag of at least a fragment of the datagram (602) is set.

11. The system of claim 9 wherein the datagram (602) comprises a plurality of datagram fragments (606(1)-(606(3)).

12. The system of claim 11 wherein the means for detecting (504) comprises means for detecting that a retransmit flag of at least one of the plurality of datagram fragments (606(1)-(606(3)) is set.

13. The system of claim 9, claim 10, claim 11 or claim 12 wherein the corrective measure comprises executing a detach/reattach procedure.

14. The system of claim 9, claim 10, claim 11 or claim 12 wherein the corrective measure comprises resetting the receiver.

15. The system of claim 9, claim 10, claim 11 or claim 12 wherein the corrective measure comprises notifying at least a carrier or a transmitter associated with the communications link of the defect.
